(19) Europäisches Patentamt
European Patent Office
Office européen des brevets

(11) Veröffentlichungsnummer : **0 058 360**
**B1**

(12) # EUROPÄISCHE PATENTSCHRIFT

(45) Veröffentlichungstag der Patentschrift : **04.07.84**

(51) Int. Cl.³ : **C 01 B 15/043**

(21) Anmeldenummer : **82100858.8**

(22) Anmeldetag : **06.02.82**

(54) **Verfahren zur kontinuierlichen Gewinnung von Alkalihyperoxid.**

(30) Priorität : **16.02.81 DE 3105584**

(43) Veröffentlichungstag der Anmeldung : **25.08.82 Patentblatt 82/34**

(45) Bekanntmachung des Hinweises auf die Patenterteilung : **04.07.84 Patentblatt 84/27**

(84) Benannte Vertragsstaaten : **AT BE CH DE FR GB IT LI NL SE**

(56) Entgegenhaltungen :
**DE-A- 2 208 347**
**DE-A- 2 313 116**
**GB-A- 2 048 842**
**US-A- 3 134 646**
**Chemical Abstracts Band 81, 1974, Columbus, Ohio, USA E. YONEMITSU et al. "Potassium superoxide", Seite 176, Spalte 1, Abstract Nr. 172403x**

(73) Patentinhaber : **Peroxid-Chemie GmbH**
**Dr.-Gustav-Adolph-Strasse 2**
**D-8023 Höllriegelskreuth bei München (DE)**

(72) Erfinder : **Dötsch, Werner, Dr. Dipl.-Chem.**
**Kreuzgasse 3**
**D-5462 Bad Hönningen (DE)**
Erfinder : **Fuchs, Paul-Wilhelm**
**Am Paffelter 71**
**D-5462 Bad Hönningen (DE)**

(74) Vertreter : **Lauer, Dieter, Dr.**
**c/o Kali-Chemie AG Postfach 220 Hans-Böckler-Allee 20**
**D-3000 Hannover 1 (DE)**

**EP 0 058 360 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur kontinuierlichen Gewinnung von Alkalihyperoxid, insbesondere Kaliumhyperoxid sowie eine zur Durchführung dieses Verfahrens geeignete Vorrichtung.

Kaliumhyperoxid ($KO_2$) findet als sauerstoffspendende Verbindung praktische Anwendung z. B. für die selbsttätige Atemluftregenerierung.

Gemäß bekannter Verfahren wird es durch Reaktion von Wasserstoffperoxid mit Kaliumhydroxid hergestellt. Technische Verfahren vereinigen dabei in einem ersten Schritt Wasserstoffperoxidlösung mit wäßrigem Kaliumhydroxid unter sorgfältiger Temperaturkontrolle.

So werden z. B. gemäß DE-A-23 13 116 die beiden Reaktionspartner in ein vorher speziell hergestelltes Gemisch der Reaktionspartner eindosiert und die erhaltene Lösung auf Temperaturen unterhalb 10 °C gehalten. Anschließend wird die Lösung, die als erstes Reaktionsprodukt ein Addukt aus Kaliumperoxid mit $H_2O_2$ (Kaliumperoxid-dihydroperoxidat) enthält zur Gewinnung von Kaliumhyperoxid einer punktförmigen und raschen Dehydratisierung unterworfen.

Gemäß Japan Kokai 74 70896 (Chem. Abstr. *81*, 172 403x) wird aus 50 % wässriger KOH und 60 % wässrigem $H_2O_2$ bei 15 bis 35 °C ein Gemisch mit einem $H_2O_2$/KOH-Verhältnis von 1,75 hergestellt, welches nachfolgend einer Sprühtrocknung unterworfen wird.

Beiden Verfahren haften wesentliche Nachteile an. So ist das erstgenannte Verfahren sehr aufwendig. Beide Verfahren stellen erst ein wässriges Reaktionsgemisch her, wobei Zersetzungsverluste durch sorgfältige Temperaturkontrolle in Grenzen gehalten werden müssen. Wegen der starken Exothermie der Reaktion müssen die Kühlvorrichtungen entsprechend groß dimensioniert sein, was sich nachteilig auf die Ökonomie des Verfahrens auswirkt.

Aufgabe der Erfindung ist es, ein Verfahren zur kontinuierlichen Gewinnung von Alkalihyperoxid, insbesondere Kaliumhyperoxid zur Verfügung zu stellen, das diese Nachteile nicht aufweist.

Die Aufgabe wird gelöst durch ein Verfahren gemäß dem Hauptanspruch.

Unter Alkalihydroxid im Sinne der Erfindung werden die Hydroxide von Lithium, Natrium, Kalium, Rubidium und Caesium verstanden, wobei für die praktische Anwendung insbesondere das Hydroxid von Kalium von Interesse ist.

Der Begriff Aerosol wird gemäß der Definition in Römpp, Chemielexikon, 1966, Seite 83 als « in Gasen verteilte, kleine feste oder flüssige Teilchen » verstanden. Zur Erzeugung der Aerosolform sind im Prinzip alle bekannten Verfahren verwendbar.

In einer bevorzugten Verfahrensvariante wird die Reaktion in Gegenwart von trockenem Gas vorgenommen, wobei als Gas ein beliebiges, inertes, vorzugsweise weitgehend von $CO_2$ befreites Gas Einsatz finden kann. Für technische Zwecke sind Stickstoff und/other Luft, insbesondere Luft bevorzugt. Der Begriff « trockenes Gas » wird dabei so verstanden, daß das Gas in der Lage ist, in den Reaktionsraum eingebrachtes oder dort entstehendes Wasser gasförmig oder dampfförmig aufzunehmen.

Es ist dabei von Vorteil, das Gas dem Reaktionsraum in zwei oder mehr Teilströmen zuzuführen, wobei zumindest ein Teilstrom vor dem Eintritt in den Reaktionsraum erwärmt wird.

Es ist zwar möglich, die Reaktionspartner direkt vor der Überführung in Aerosolform miteinander zu vereinigen, bevorzugt wird aber, die Reaktionspartner getrennt voneinander in Aerosolform zu überführen. So können z. B. die Reaktionspartner an gegenüberliegenden Stellen des Reaktionsraumes in diesen eingeführt und in Aerosolform überführt werden. Besonders bevorzugt wird aber, die Reaktionspartner zwar getrennt voneinander, aber dennoch durch eine einzige Düse (Mehrstoffdüse) in den Reaktionsraum einzubringen und in Aerosolform zu überführen. Auf diese Weise wird eine sorgfältige Durchmischung beider Aerosole und eine so gut wie quantitativ verlaufende Reaktion gesichert.

Die Reaktionspartner werden in etwa stöchiometrischem Verhältnis entsprechend der Bruttoreaktionsgleichung

$$3\ H_2O_2 + 2\ KOH \longrightarrow 2\ KO_2 + 4\ H_2O$$

miteinander umgesetzt, so daß das Molverhältnis von Wasserstoffperoxid zu Alkalihydroxid im Bereich von 1,3 : 1 bis 2,0 : 1, vorzugsweise im Bereich von 1,5 : 1 bis 1,7 : 1 liegt.

Es ist bekannt, daß bei der Umsetzung zwischen Wasserstoffperoxid und Kaliumhydroxid zu Kaliumhyperoxid die Reaktion in zwei Teilschritten abläuft, die zusammen obige Bruttogleichung ergeben. Als erstes, in bekannten Verfahren auch isoliertes Zwischenprodukt bildet sich ein Addukt von Kaliumperoxid mit $H_2O_2$, Kaliumperoxid-Dihydroperoxidat ($K_2O_2 \cdot 2\ H_2O_2$) gemäß der Reaktionsgleichung

$$3\ H_2O_2 + 2\ KOH \longrightarrow K_2O_2 \cdot 2\ H_2O_2 + 2\ H_2O$$

Dieses zersetzt sich in einer Dismutationsreaktion bei erhöhter Temperatur zu Kaliumhyperoxid nach

$$K_2O_2 \cdot 2\ H_2O_2 \longrightarrow 2\ KO_2 + 2\ H_2O.$$

Im erfindungsgemäßen Verfahren erfolgt die Umsetzung der Reaktionspartner mindestens bei derjenigen Temperatur, die der Dismutationstemperatur des Adduktes entspricht; insbesondere erfolgt die Umsetzung bei mindestens 130 °C, vorzugsweise bei 200 bis 220 °C.

Die für die Einstellung der genannten Temperatur erforderliche Energie wird zumindest teilweise von der exothermen Reaktionsenthalpie zur Verfügung gestellt. Der eventuelle Restbedarf wird durch die bereits genannte Erwärmung des gemäß einer bevorzugten Variante in den Reaktionsraum einzuführenden trockenen Gases gedeckt. Es ist für den Fachmann selbstverständlich, daß dabei die Parameter Durchsatzgeschwindigkeiten, Gaseintrittstemperatur und Reaktionsenthalpie zur Erreichung optimaler Ergebnisse aufeinander abzustimmen sind.

Das für die Umsetzung verwendete Hydroxid kann als feinpulveriger Feststoff eingesetzt werden, so daß das gebildete Aerosol ein disperses System vom Typ fest/gasförmig darstellt. Bevorzugt wird aber ein Aerosol vom Typ flüssig/gasförmig. Die zu dessen Herstellung verwendete wäßrige Lösung des Hydroxids enthält vorzugsweise mindestens 45 Gew.-% Hydroxid, insbesondere von 55 bis 60 Gew.-% Hydroxid.

Das für die Reaktion eingesetzte Wasserstoffperoxid, das gewünschtenfalls übliche Aktivsauerstoffstabilisatoren enthalten kann, wird vorzugsweise als Lösung mit mindestens 50 Gew.-% eingesetzt, insbesondere als wäßrige Lösung mit 70 bis 85 Gew.-% $H_2O_2$.

Eine weitere Aufgabe der Erfindung ist es, eine Vorrichtung zur Durchführung des geschilderten Verfahrens zur Verfügung zu stellen.

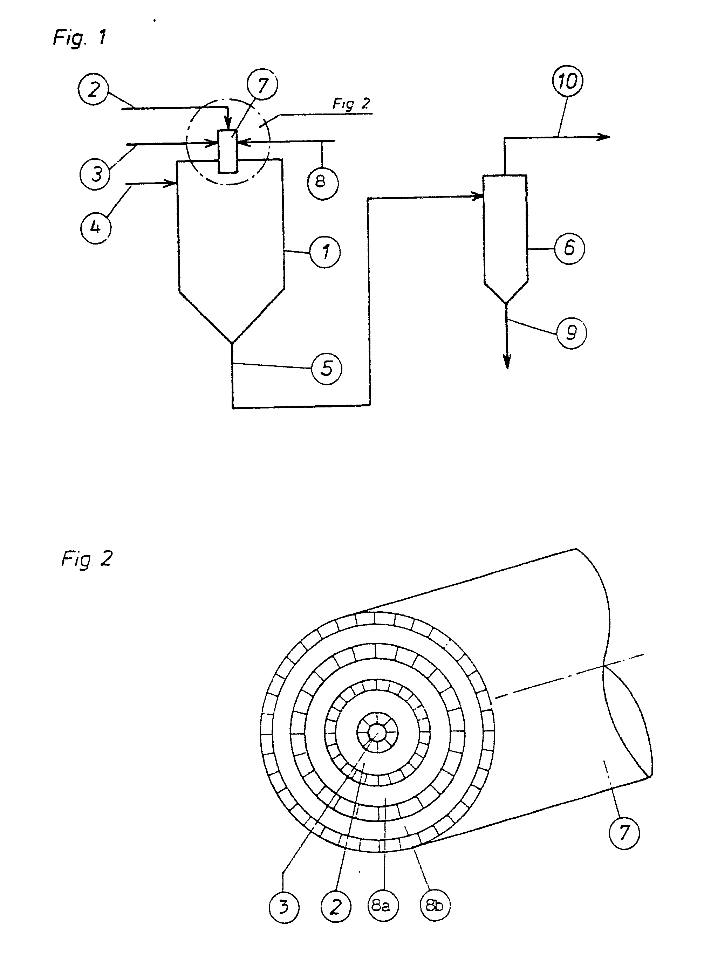

Diese Vorrichtung, von der eine besondere Ausführung in Fig. 1 schematisch dargestellt ist, ist gekennzeichnet durch einen Reaktionsraum (1), der mit getrennten Zuführungen für Wasserstoffperoxid (2), Alkalihydroxid (3) und trockenem Gas (4) sowie einer Ableitung (5) versehen ist, wobei die Ableitung (5) mit Mitteln (6) zur Trennung der Phasen fest/gasförmig verbunden ist.

In einer besonderen Ausführungsform enden die Zuführungen für Wasserstoffperoxid (2) und Hydroxid (3) in einer Mehrstoffdüse (7). Diese enthält vorteilhafterweise zusätzlich eine oder mehrere Zuführungen für ein trockenes Gas (8). In einer besonders bevorzugten Anordnung sind die Zuführungen für Peroxid (2) und Hydroxid (3) sowie für trockenes Gas (8) in der Mehrstoffdüse (7) koaxial angeordnet. Fig. 2 zeigt die Draufsicht auf den auslaßseitigen Teil einer derartigen Mehrstoffdüse.

Bei für den Dauerbetrieb geeigneten Vorrichtungen bestehen die durch Korrosion gefährdeten Teile vorteilhaft aus nichtmetallischem Werkstoff, insbesondere aus alkalibeständigem Glas.

Mit dem erfindungsgemäßen Verfahren lassen sich wesentliche Vorteile gegenüber bekannten Verfahren erzielen. So ist es ökonomisch vorteilhaft, da z. B. die Reaktionswärme nicht durch aufwendige Kühlvorrichtungen abgeführt werden muß, sondern im System vorteilhaft verwendet wird. Damit verbunden ist eine erhebliche Energieeinsparung sowohl durch Fortfall der Kühlung als auch durch Einsparung an Trockenenergie. Außerdem ist es bei diesem kontinuierlichen Verfahren möglich, mit hohen Durchsatzgeschwindigkeiten zu arbeiten.

Des weiteren liefert das Verfahren ein qualitativ gutes Produkt in hoher Ausbeute.

Das folgende Beispiel erläutert das erfindungsgemäße Verfahren:

## Beispiel

Die Umsetzung der Reaktionspartner erfolgte in einer Apparatur, deren schematische Anordnung in Fig. 1 dargestellt ist. Über eine Mehrstoffdüse (7) mit vier konzentrisch angeordneten Auslässen (2, 3, 8a und 8b) gemäß der schematischen Darstellung in Fig. 2 wurden 285,5 g/h $H_2O_2$ (85 Gew.-%, stabilisiert mit 15 g/l $MgSO_4 \cdot 6\ H_2O$) über Leitung 2, 428 g/h 55 gew.-%ige wäßrige KOH über Leitung 3 und zusätzlich trockener Stickstoff unter einem Druck von 2 bar über die Leitungen 8a und 8b in den 75 l fassenden Reaktionsraum 1 eingebracht. Über Leitung 4 wurde zusätzlich 100 $m^3$/h trockene, $CO_2$-freie Luft mit einer Temperatur von 250 °C in den Reaktionsraum 1 eingeleitet. Am Eintritt in die Ableitung 5 betrug die Temperatur des fest/gasförmigen Reaktionssystems 210 °C. Über die Ableitung 5 war die Reaktionskammer 1 mit einem Zyklon 6 verbunden, in dem das feste Reaktionsprodukt von der gasförmigen Phase abgetrennt wurde. Während letztere über Leitung 10 abgeführt wurde, konnte über die Entnahmeleitung 9 pulverförmiges $KO_2$ (Gehalt 85 %) entnommen werden. Die Feinteiligkeit des Pulvers erlaubt, es ohne weitere mechanische Behandlung direkt in evtl. nachfolgende Konfektionierungsverfahren, wie Tablettieren, Pelletieren etc. einzusetzen.

## Ansprüche

1. Verfahren zur kontinuierlichen Gewinnung von Alkalihyperoxid, insbesondere Kaliumhyperoxid, durch Umsetzung von Wasserstoffperoxid mit Alkalihydroxid, dadurch gekennzeichnet, daß man die Reaktionspartner Wasserstoffperoxid und Alkalihydroxid in Aerosolform miteinander reagieren läßt.

2. Verfahren nach Anspruch 1, dadurch gekennzeichnet, daß man die Reaktion in Gegenwart von trockenem Gas vornimmt.

3. Verfahren nach Anspruch 2, dadurch gekennzeichnet, daß das trockene Gas weitgehend von $CO_2$ befreit ist.

4. Verfahren nach einem der Ansprüche 2 oder 3, dadurch gekennzeichnet, daß das trockene Gas

der Reaktionsstufe in zwei oder mehr Teilströmen zugeführt wird, wobei zumindest ein Teilstrom vor dem Eintreten in die Reaktionsstufe erwärmt wird.

5. Verfahren nach einem der vorhergehenden Ansprüche, dadurch gekennzeichnet, daß die Reaktionspartner voneinander getrennt in Aerosolform überführt werden.

6. Verfahren nach einem der vorhergehenden Ansprüche, dadurch gekennzeichnet, daß die Reaktionspartner Wasserstoffperoxid und Alkalihydroxid im molaren Verhältnis von 1,3 : 1 bis 2,0 : 1, vorzugsweise 1,5 : 1 bis 1,7 : 1 umgesetzt werden.

7. Verfahren nach einem der vorhergehenden Ansprüche, dadurch gekennzeichnet, daß die Reaktion bei einer Temperatur durchgeführt wird, die mindestens der Dismutationstemperatur des Adduktes aus Alkaliperoxid mit Wasserstoffperoxid entspricht.

8. Verfahren nach Anspruch 7, dadurch gekennzeichnet, daß die Reaktion bei einer Temperatur von mindestens 130 °C, vorzugsweise bei 200 bis 220 °C durchgeführt wird.

9. Verfahren nach einem der vorhergehenden Ansprüche, dadurch gekennzeichnet, daß man das Hydroxid in Form einer wäßrigen Lösung einsetzt.

10. Verfahren nach Anspruch 9, dadurch gekennzeichnet, daß man eine Lösung mit einer Hydroxidkonzentration von mindestens 45 Gew.-%, vorzugsweise von 55 bis 60 Gew.-% einsetzt.

11. Verfahren nach einem der vorhergehenden Ansprüche, dadurch gekennzeichnet, daß man Wasserstoffperoxid einer Konzentration von mindestens 50 Gew.-% einsetzt.

12. Verfahren nach Anspruch 11, dadurch gekennzeichnet, daß man eine wäßrige Wasserstoffperoxidlösung einer Konzentration von 70 bis 85 Gew.-% einsetzt.

13. Vorrichtung zur Durchführung des Verfahrens nach einem der vorhergehenden Ansprüche, gekennzeichnet durch einen Reaktionsraum (1), der mit getrennten Zuführungen für Wasserstoffperoxid (2), Alkalihydroxid (3) und trockenem Gas (4) sowie einer Ableitung (5) versehen ist, wobei die Ableitung (5) mit Mitteln (6) zur Trennung der Phasen fest/gasförmig verbunden ist.

14. Vorrichtung nach Anspruch 13, dadurch gekennzeichnet, daß die Zuführungen für Wasserstoffperoxid (2) und Alkalihydroxid (3) im Reaktionsraum in einer Mehrstoffdüse (7) enden.

15. Vorrichtung nach Anspruch 14, dadurch gekennzeichnet, daß die Mehrstoffdüse (7) zusätzlich eine oder mehrere Zuführungen für ein trockenes Gas (8) enthält.

16. Vorrichtung nach Anspruch 14 oder 15, dadurch gekennzeichnet, daß die Zuführungen für Wasserstoffperoxid (2) und Alkalihydroxid (3) sowie für trockenes Gas (8) in der Mehrstoffdüse (7) koaxial angeordnet sind.

17. Vorrichtung nach einem der Ansprüche 13 bis 16, dadurch gekennzeichnet, daß die durch Korrosion gefährdeten Teile der Vorrichtung aus nicht metallischem Werkstoff, vorzugsweise alkalibeständigem Glas bestehen.

**Claims**

1. Process for the continuous production of alkali superoxide, particularly potassium superoxide, by the reaction of hydrogen peroxide with alkali hydroxide, characterised in that the reactants hydrogen peroxide and alkali hydroxide are caused to react together in aerosol form.

2. Process according to claim 1, characterised in that the reaction is carried out in the presence of dry gas.

3. Process according to claim 2, characterised in that the dry gas is largely free of $CO_2$.

4. Process according to either of claims 2 or 3, characterised in that the dry gas is supplied to the reaction stage in two or more partial streams, at least one partial stream being heated prior to entry into the reaction stage.

5. Process according to any of the preceding claims characterised in that the reagents are converted to aerosol form separately.

6. Process according to any of the preceding claims, characterised in that the reactants hydrogen peroxide and alkali hydroxide are caused to react in a molar ratio of 1.3 : 1 to 2.0 : 1, preferably 1.5 : 1 to 1.7 : 1.

7. Process according to any of the preceding claims characterised in that the reaction is carried out at a temperature corresponding to at least the disproportionation temperature of the adduct of alkali peroxide with hydrogen peroxide.

8. Process according to claim 7, characterised in that the reaction is carried out at a temperature of a least 130 °C, preferably at 200 °C to 220 °C.

9. Process according to any of the preceding claims, characterised in that the hydroxide is used in the form of an aqueous solution.

10. Process according to claim 9, characterised in that a solution with a hydroxide concentration of a least 45 wt. %, preferably of 55 to 60 wt. % is used.

11. Process according to any of the preceding claims characterised in that hydrogen peroxide is used in a concentration of at least 50 wt. %.

12. Process according to claim 11, characterised in that an aqueous hydrogen peroxide solution is used in a concentration of 70 to 85 wt. %.

13. Device for the execution of the process according to any of the preceding claims, characterised by a reaction chamber (1) provided with separate supplies for hydrogen peroxide (2), alkali hydroxide (3) and dry gas (4) as well as an outlet (5), the outlet (5) being connected to a means (6) for separating the solid/gaseous phases.

14. Device according to claim 13, characterised in that the supplies for hydrogen peroxide (2) and alkali hydroxide (3) terminate in a mixer nozzle (7) in the reaction chamber.

15. Device according to claim 14, characterised in that the mixer nozzle (7) also contains one or more supplies for a dry gas (8).

16. Device according to claim 14 or 15, characterised in that the supplies of hydrogen peroxide (2), alkali hydroxide (3) and dry gas are arranged concentrically in the mixer nozzle (7).

17. Device according to any of claims 13 to 16, characterised in that the parts of the device exposed to corrosion are made of a non-metallic material, preferably alkali-resistant glass.

**Revendications**

1. Procédé pour la préparation en continu de superoxyde alcalin, en particulier de superoxyde de potassium, par réaction de peroxyde d'hydrogène avec de l'hydroxyde alcalin caractérisé en ce que l'on fait réagir entre eux les partenaires de la réaction, à savoir le peroxyde d'hydrogène et l'hydroxyde alcalin, à l'état d'aérosol.

2. Procédé suivant la revendication 1, caractérisé en ce qu'on effectue la réaction en présence de gaz sec.

3. Procédé suivant la revendication 2, caractérisé en ce que le gaz sec est substantiellement exempt de $CO_2$.

4. Procédé suivant l'une des revendications 2 ou 3, caractérisé en ce que le gaz sec est amené à l'étape de réaction en deux ou plusieurs courants partiels, l'un au moins de ces courants partiels étant chauffé avant de pénétrer dans l'étape de réaction.

5. Procédé suivant l'une des revendications précédentes, caractérisé en ce que les partenaires de la réaction sont transformés séparément l'un de l'autre à l'état d'aérosol.

6. Procédé suivant l'une des revendications précédentes, caractérisé en ce que les partenaires de la réaction, à savoir le peroxyde d'hydrogène et l'hydroxyde alcalin, sont mis à réagir dans un rapport molaire de 1,3 : 1 à 2,0 : 1, de préférence de 1,5 : 1 à 1,7 : 1.

7. Procédé suivant l'une des revendications précédentes, caractérisé en ce que la réaction est effectuée à une température qui correspond au moins à la température de dismutation du composé d'addition comprenant du peroxyde alcalin et du peroxyde d'hydrogène.

8. Procédé suivant la revendication 7, caractérisée en ce que la réaction est effectuée à une température d'au moins 130 °C, de préférence à 200-220 °C.

9. Procédé suivant l'une des revendications précédentes, caractérisé en ce qu'on utilise l'hydroxyde à l'état d'une solution aqueuse.

10. Procédé suivant la revendication 9, caractérisé en ce qu'on utilise une solution ayant une concentration en hydroxyde d'au moins 45 % en poids, de préférence de 55 à 60 % en poids.

11. Procédé suivant l'une des revendications précédentes, caractérisé en ce qu'on utilise du peroxyde d'hydrogène ayant une concentration d'au moins 50 % en poids.

12. Procédé suivant la revendication 11, caractérisé en ce qu'on utilise une solution aqueuse de peroxyde d'hydrogène ayant une concentration de 70 à 85 % en poids.

13. Installation pour l'exécution du procédé suivant l'une des revendications précédentes, caractérisée en ce qu'elle comporte un espace réactionnel (1) pourvu de conduites d'amenée séparées pour le peroxyde d'hydrogène (2), l'hydroxyde alcalin (3) et le gaz sec (4) ainsi que d'une conduite d'évacuation (5), celle-ci étant raccordée à des moyens (6) permettant de séparer les phases solide/gaz.

14. Installation suivant la revendication 13, caractérisée en ce que les conduites d'amenée du peroxyde d'hydrogène (2) et de l'hydroxyde alcalin (3) aboutissent dans l'enceinte réactionnelle dans un gicleur pour plusieurs substances (7).

15. Installation suivant la revendication 14, caractérisée en ce que le gicleur pour plusieurs substances (7) comporte en outre une ou plusieurs amenées d'un gaz sec (8).

16. Installation suivant la revendication 14 ou 15, caractérisée en ce que les conduites d'amenée du peroxyde (2) et de l'hydroxyde alcalin (3) ainsi que celle du gaz sec (8) sont placées coaxialement dans le gicleur pour plusieurs substances (7).

17. Installation suivant l'une des revendications 13 à 16, caractérisée en ce que les parties de l'installation qui sont menacées par la corrosion sont constituées d'un matériau non métallique, de préférence en verre résistant aux alcalis.

Fig. 1

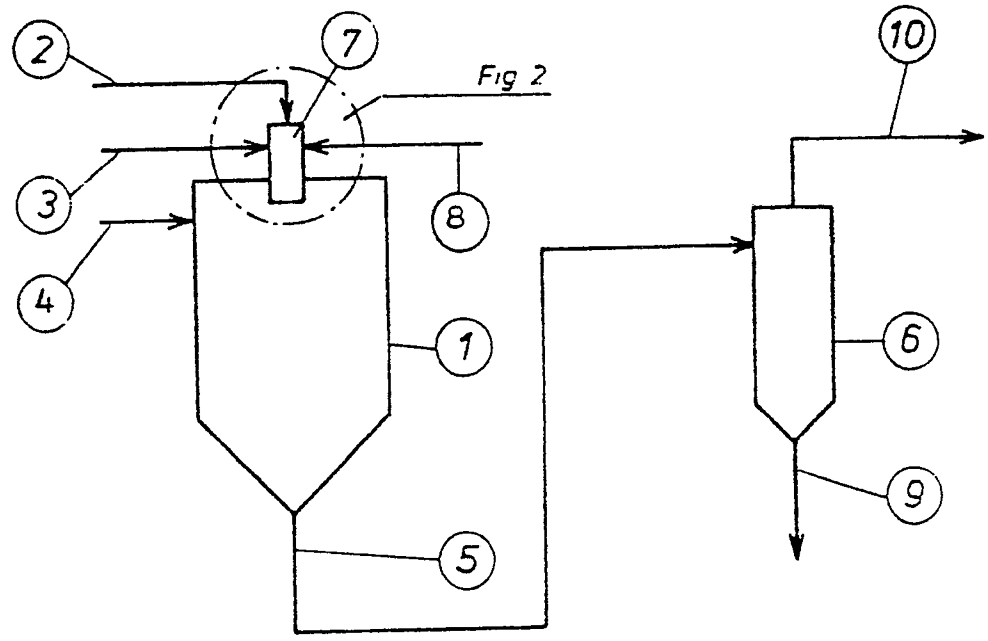


Fig. 2